# EUROPEAN PATENT APPLICATION

(11) **EP 1 351 358 A1**
(43) Date of publication of application: **08.10.2003**
(21) Application number: 02252478.9
(22) Date of filing: 05.04.2002
(51) Int. Cl.: H02G 3/04

(54) **Corner and junction assembly for service provision ducting and components therefor**

(71) Applicant: C & C MARSHALL LIMITED, ST. Leonards-on-Sea, East Sussex TN38 9YJ (GB)
(72) Inventor: Austin, Brian, Westfield TN35 4QZ, East Sussex (GB); Softley, Andrew John Kenneth, St Leonards TN37 7EF, East Sussex (GB); Wilson, Ron, Maidstone ME16 8NR, Kent (GB)
(74) Representative: Lamb, Martin John Carstairs

(57) **Abstract**

In order to provide designs of corner and junction assemblies for service provision ducting which are simple to construct and do not require a large number of components, there is provided an internal angle cover part 22, 28, 31, an external angle cover part 21 and a straight wall cover part 36. These can be combined together to form a flat bend (figure 4), a cross-over (figure 5) or a flat T (figure 6). Each cover part comprises a cover surface 22, 23, 28, 35 which extends up to, but no further than the centre line of the respective section of service provision ducting.

## Description

The present invention relates to comer or junction assemblies for service provision ducting and to components therefor.

Ducting for providing for example electrical and communications services is widely used within buildings. Such ducting particularly comprises a longitudinally extending channel of an indefinite length defined by a longitudinally extending base member and at least one longitudinally extending wall member projecting from the base member.
The ducting may be further divided into parallel co extending channels of indefinite length divided by a longitudinally extending internal wall member projecting from the base member. This division of ducting into parallel channels is referred to as "segregation". Ducting normally comprises at least one cover member for closing the open face of the ducting so that, in use, the conductors or communication cables contained within the ducting are protected from contamination or contact.

The ducting may comprise trunking which may be mounted on walls or floor extending in a horizontal or vertical direction. The line of the ducting may include at least one flat bend, in which a pair of sections of service provision ducting meet at an angle with the floor members of sections of service provision ducting substantially coplanar. The line of ducting may include at least one junction, where three or more sections of service provision ducting meet, with the floor members of all the sections of service provision ducting being in substantially the same plane. The junction may comprise for example a flat T, a three-way junction or a four-way junction or cross over.

There are a number of known ways of constructing flat bends, flat T's and flat junctions. The present invention is concerned, however, with providing a cover member for covering the flat corner, flat T or flat junction it is known to provide a cover for a corner, flat T or junction by providing a single cover member which covers all for the sections for service provision ducting at the point where they meet. Such covers are generally large and difficult to manufacture. In order to provide cover structures for all types of junction, a large number of different types of component are required.

It is known to provide a cover member for a junction by taking cover parts which are normally used for sections of service provision ducting and cutting them to an appropriate shape. However, this can be complex and time consuming for installers.

The present invention sets out to provide a corner or junction assembly for service provision ducting which includes cover members which are simple for manufacture and install. Further, the present invention sets out to provide flat corner or junction assemblies for service provision ducting which includes cover members, and which do not require a large number of different components.

The present inventors have realised that cover parts can be provided which extend from the angle between adjacent sections of service provision ducting up to the centre line of each section of service provision ducting. Such cover parts are simple to manufacture and not bulky. The cover parts can meet one another, or another cover member at or near the centre line of the service provision ducting. In this way, the corner or junction can be assembled with cover parts in a simple way.

In the description that follows, the term "internal angle" will be used to mean an angle defined between two sections of service provision ducting which meet at a flat bend or junction, which angle is less than 180°. The term "external angle" will be used to define the angle between two sections of service provision ducting which meet in a flat bend or junction, which angle is greater than 180°.

The present inventors have further realised that a cover part for an internal angle of a flat surface can be used in a variety of different structures, for example in a flat corner or in a T-junction or in cross over, as will be further explained below. In this way, it has been found that a number of simple parts can be used to build up any required structure.

The present invention accordingly provides a comer or junction assembly comprising at least two sections of service provision ducting meeting at an angle, each section comprising a longitudinally extending floor member and at least one longitudinally extending wall member projecting from the floor member, the floor members of the sections of service provision ducting being substantially co-planar, and adjacent sections of service provision ducting defining between them an angle, a cover part being provided extending from each angle up to, but no further than, the centre line of the respective sections of service provision ducting.

The present invention further provides a method of assembling a corner or junction assembly for service provision ducting, comprising placing at least two sections of service provision ducting at an angle to one another, each section comprising a longitudinally extending floor member and at least one longitudinally extending wall member projecting from the floor member, the floor members of the sections of service provision ducting being substantially coplanar and adjacent sections of service provision ducting defining between them an angle, the method further including the step of inserting a cover part which extends from each angle up to but no further than the centre line of the respective sections of service provision ducting.

The present invention further provides a component for a corner or junction assembly as defined above, the component comprising a corner surface and a cover surface extending from the corner surface, whereby in use, the corner surface is located in the angle between two sections of adjacent service provision ducting and the cover section extends from the angle up to but no further than the centre line of the respective sections of service provision ducting.

In order to form a flat bend or corner, the assembly will comprise two sections of service provision ducting meeting at an angle, the sections of service provision ducting defining a first, internal angle and a second, external angle, there being a first cover part extending from the internal angle and a second cover part extending from the external angle. Preferably, each cover part comprises a corner surface and a cover surface extending from the corner surface. The ends of the sections of service provision ducting may be cut at an angle to their longitudinal direction, to form a mitre. Alternatively, one section of service provision ducting may abut against the side of a second piece of service provision ducting, a wall member of the second section of service provision ducting being removed at the position where the first section of service provision ducting abuts it.

Preferably, the corner surface comprises a curved surface, the radius of curvature of the curved surface being not less than a predetermined value. The assembly of the present invention may be used in service provision ducting which carries communications cables. It is normally required that such communications cables should not be bent through a curve of radius less than a specified value, in order to prevent loss of signal quality. The predetermined value is normally in the range 25 - 75 mm and is normally specified by the manufacturer of the cables. If the sections of service provision ducting are not continued to the corner, a part of the bend will in fact be defined by the cover surface of each cover part. Preferably, accordingly, the radius of curvature of the corner surface of the cover part is not less than a value falling in a range 25 - 75 mm.

Suitably, the bend is a 90° bend.

In order to form a flat T junction, the assembly may comprise a first section of service provision ducting and a second section of service provision ducting which abuts the side of the first section of service provision ducting, a section of a wall member of the first section of the service provision ducting being removed, which substantially corresponds in size and position to the width of the second sections of the service provision ducting, the first and second section of service provision ducting defining between them two internal angles. Further, opposite the internal angles, there is a straight side of the first section of service provision ducting. Alternatively, a flat T-junction may be formed by placing two sections of service provision which extend substantially in line with one another and a third section of service provision ducting abutting the two sections of service provision ducting at the zone where they meet. The ends of the two sections of service provision ducting may meet or they may be displaced from one another. The ends of the two sections of service provision ducting and the third section of service provision ducting may be cut at an angle to their longitudinal direction to form a mitre shape T. In all cases, the third section of service provision ducting defines two internal angles with the other two sections of service provision ducting. Opposite the two internal angles, there is a straight side.

Suitably, in all cases, there is a first cover part extending from the first internal angle, a second cover part extending from the second internal angle and a third cover part extending from the side of the service provision ducting opposite the junction. Suitably, the junction is a right angled flat T junction. In this case, the first and second cover parts may be substantially identical to one another.

Preferably, the first and second cover parts each comprise a corner section and a cover section extending from the corner section. Preferably, the corner section of each cover part comprises a curved section which is of a radius of curvature not less than a value falling in the range 25 - 75 mm, for the reasons explained above. Suitably, the first and second cover parts are substantially identical to the internal angle cover part used in a flat bend of 90°. Suitably, the third cover part comprises a wall section and a cover section extending from the wall section.

In order to form a four way junction or cross-over, there is a preferably a first section of service provision ducting, a second section of service provision ducting meeting the first section of service provision ducting on a first side thereof and a third section of service provision ducting meeting the first section of service provision ducting on the opposite side. Sections of wall members of the first section of service provision ducting corresponding in size and position to the third and second sections of service provision ducting may be cut away. Alternatively, the four-way junction may be defined by four sections of service provision ducting. Two sections of service provision ducting which meet end to end and which extend along substantially the same straight line may be provided, two other sections of service provision ducting abutting the sides of the first two sections of service provision ducting. The sections of service provision ducting may extend towards one another but stop short of one another to form an open space between them. Alternatively, four sections of service provision ducting may be provided which are cut at their ends to form triangular points, to form a mitre junction. In all cases, the sections of service provision ducting, define between them four internal angles. Preferably, a cover part extends from each internal angle.

Preferably, sections of service provision ducting meet at an right angle. In this case, all of the cover parts may be identical to one another. They may be identical to the cover part used in a flat bend internal angle. Each suitably comprises a corner section and cover section extending from the corner section.

Preferably, each corner section comprises a curved section of radius of curvature not less than a value falling in the range 25 - 75 mm, for the reasons set out above.

Any number of sections of service provision ducting may meet to form a flat junction. Where they meet, they will define internal angles between them. Cover parts may be provided for extending from internal angles extending up to the centre lines of the sections of service provision ducting which define the internal angle.

It can be seen that, if an internal angle cover part, an external angle cover part and a flat wall cover part are provided, a cover can be provided for a right angle flat bend, a right angle T junction or a right angle cross over using a very small number of different parts. This provides a very flexible system which is simple to install and use.

Preferably, in each case, the cover part extends up to the centre lines of the sections of service provision ducting between which it lies. In this way, when assembled, the cover sections of all the cover parts used in the assembly will meet at the centre lines of respective sections of service provision ducting.

It is, however, possible that the cover section will not extend as far as the centre line, in which case, a further cover part, for example, a lid structure, may be provided to close the top of the junction between the cover sections.

The service provision ducting used in the present invention preferably comprises at least two longitudinally extending wall members projecting from the wall member, defining between them a longitudinally extending channel.

The present invention may be used with sections of service provision ducting which include at least one dividing member which extends substantially along the centre line of each section of service provision ducting. Suitably, this central dividing wall comprises engaging means along its top edge. In this case, the cover sections may each be provided with engaging means for engaging in the engaging means of the central dividing wall.

Means may be provided for engaging one cover section to an adjacent cover section. However, where each may be separately connected to the central dividing wall, there is preferably no direct connection between adjacent cover sections. Engagement means may be provided on the cover sections for engaging outer wall members of the sections of service provision ducting.

The corner or junction assembly of the present invention is particularly suitable for use with radiussed inserts or base members. This is particularly required where the ducting is intended to carry communications cables, particularly fibre optic cables. Due to the internal design of such cables, it is important not to bend them in such a way that they have a radius of curvature less than a given amount, which is normally from 25mm to 75mm, with 50mm being typical. The actual value will be determined by the respective physical properties of the cable and is specified by the manufacturer. In a flat bend of known type, the walls of the sections of service provision ducting meet at right angles where the radius of curvature is much less than the specified amount and is therefore unsuitable for use for fibre optic cables. Preferably, a corner piece is provided extending between two sections of service provision ducting, the corner piece comprising a surface having a first end lying on the wall member of the first section of service provision ducting and a second end lying on a wall member of the second section of service provision ducting, and a curved section of radius not less than a value in the range 25-75mm joining the first and second ends of the corner piece, at least one rib being provided having a straight edge projecting from a rear surface of the corner piece and lying against a wall member of the first or second section of service provision ducting. The corner piece may be provided for an internal angle, in which case the curved section extends over an angle which is suitably in the range 30-120°, more preferably about 90°. A corner piece may be provided for extending around an external bend between two sections of service provision ducting, in which case, the curved section extends through an angle in the range 200° - 300°, preferably around 270°.

It is known to provide longitudinally extending engagement means projecting from the floor member of a section of service provision ducting. These are provided for supporting within the ducting longitudinally extending electrical conductors (commonly called busbars) or electrical or optical communications cables. Preferably, the corner piece is provided with slots for engaging over these engagement members.
Accordingly, the corner piece preferably comprises a surface having a first end lying on the wall member of a first section of service provision ducting and a second end lying on the wall member of a second section of service provision ducting and a curved section of radius in the range 25-75mm joining the first and second ends, at least one edge of the curved section extending between the ends comprising at least one slot engaging around an engagement member of a respective section of service provision ducting.

The service provision ducting may be made of cast, moulded, formed or extruded material, for example thermoplastic or metal, particularly uPVC or aluminium. Suitable ducting is described for example in GB-A-2253096 and GB-A-2282278.

The cover parts may be made of cast, formed, moulded or extruded material in the same way.

The present invention will be further described with reference to the accompanying drawings, in which:
Figure 1 is a schematic plan view of a flat bend formed from two sections of service provision ducting.
Figure 2 is a schematic plan view of flat T-junction formed between two sections of service provision ducting.
Figure 3 is schematic plan view of a cross-over formed between three sections of service provision ducting.
Figure 4 is sketch plan view of a corner assembly according to the invention.
Figure 5 is sketch plan view of cross over junction according to the present invention
Figure 6 is sketch plan view of a flat T-junction according to the present invention.
Figure 7 is sketch isometric view of flat bend formed in a known way using two sections of service provision ducting.
Figure 8 is a sketch isometric view of a first embodiment of straight wall cover part for use with the present invention.
Figure 9 is sketch isometric view of a first embodiment of an internal angle cover part for use with the present invention.
Figure 10 is a sketch isometric view of a first embodiment of an external end cover part for use with the present invention.
Figures 11-13 show sketch views of a second embodiment of external angle cover part according to the present invention.
Figures 14-17 are sketch views of a second embodiment of internal angle cover part according to the present invention.
Figures 18-21 are sketch views of a second embodiment of straight wall cover part for use with the present invention.
Figure 22 is a sketch plan view of an internal angle cover part and an external angle cover part assembled together with a corner piece.
Figure 23 is a sketch view of the underneath of figure 22.
Figure 24 is a sketch view of the underneath of a flat T formed using two internal angle cover parts and one straight wall cover part and four corner pieces.
Figure 25 is a sketch plan view of the top of figure 24.
Figure 26 is a sketch plan view of a right angle cross over formed using four internal angle cover parts and four corner pieces.
Figure 27 is a sketch view from the underneath of figure 26.
Figure 28 is a sketch plan view of a corner piece as used in figures 22-27.
Figure 29 is a sketch plan view of a corner piece used in figures 22-27.
Figure 30 is an isometric view of the corner piece figure 28.
Figure 31 is an isometric view of the corner piece of figure 29. Figures 1-3 show known ways of forming various types of structure using service provision ducting.

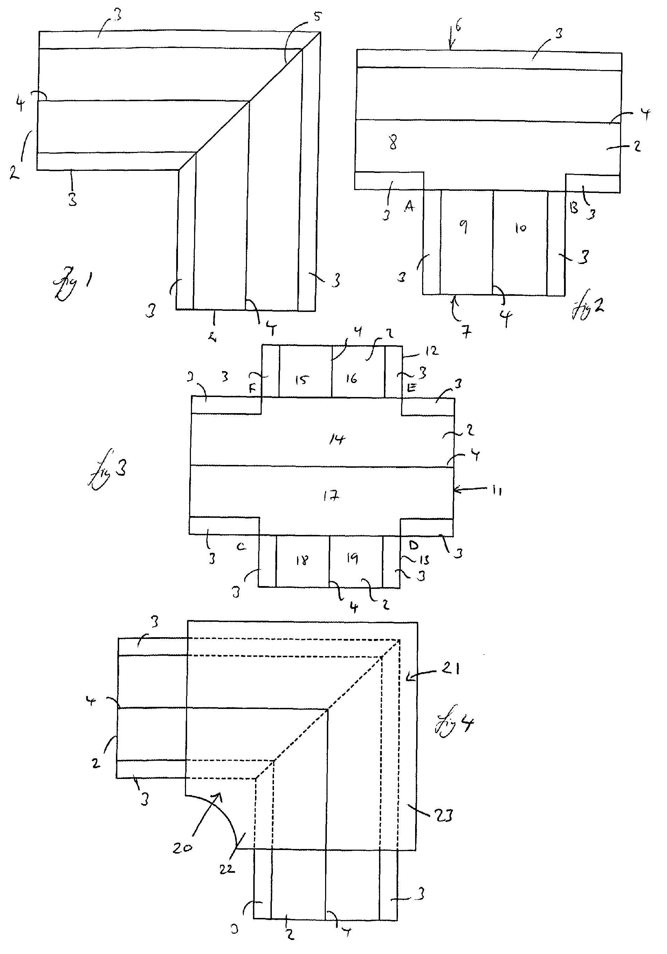

Figure 1 shows two lengths of service provision ducting which meet at a right-angled corner. Each length of service provision ducting comprises a longitudinally extending floor member 2 and a pair of longitudinally extending wall member 3 which extend upwards from the longitudinally extending floor member 2. They are shown double thickness for clarity in figure 1. Further, each section of service provision ducting comprises a longitudinally extending dividing wall 4 which extends along the centre line of the section of service provision ducting. The ends of the sections are cut at a 45° angle so that they form a 90° mitre bend along the line 5.

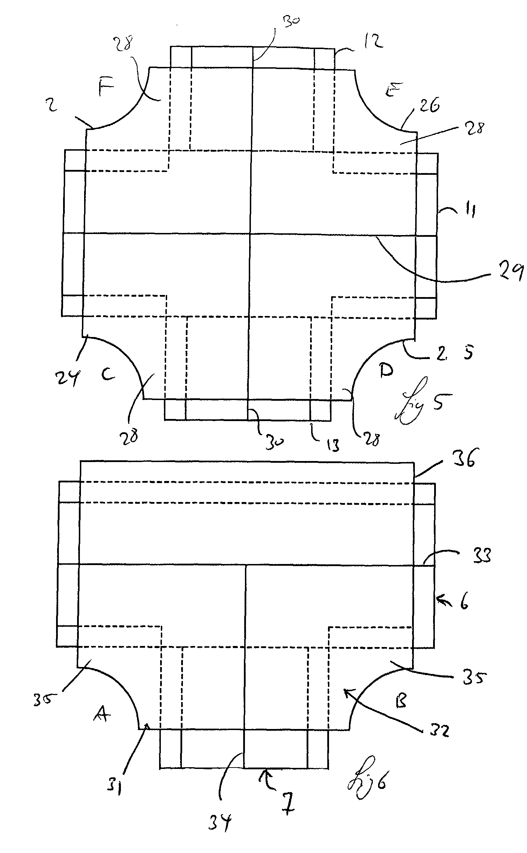

In figure 2, two lengths of service provision ducting are joined to form a flat T. Each length of service provision ducting is of the same type as shown in figure 1 and is numbered accordingly.

The first section 6 of service provision ducting, extends continuously from left to right. The second section, 7, terminates against the side of the first section 6. At the position where the second section terminates, the wall 3 of the first section 6 has been cut away to allow free communication between the lower channel 8 of the first section 6 and the channels 9 and 10 of the second section 7.

In figure 2, the first right angle A and the second right angle B are defined between the first and second sections of service provision ducting 6 and 7.

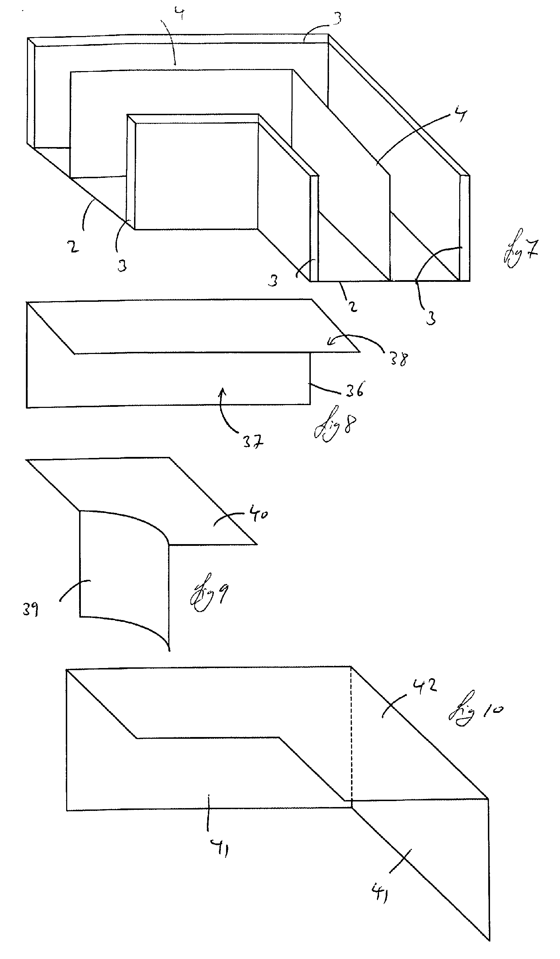

Figure 3 shows how three sections of service provision ducting may be joined together to form a cross-over. Each section is substantially as shown in figure 1 and is similarly numbered. A first section 11 extends continuously from left to right. The other two sections, 11 and 12, meet the first section on opposite sides. At the positions where the second and third sections 12 and 13 terminate, the wall 3 of the first section 11 has been cut away so that there is communication between the top channel 14 of the first section 11 and the channel 15 and 16 of the second section 12 and free communication between the lower channel 17 of the first section 11 and the channels 18 and 19 of the third section 13 of service provision ducting.

In figure 3, right angles C, D, E and F are formed between the sections of service provision ducting.

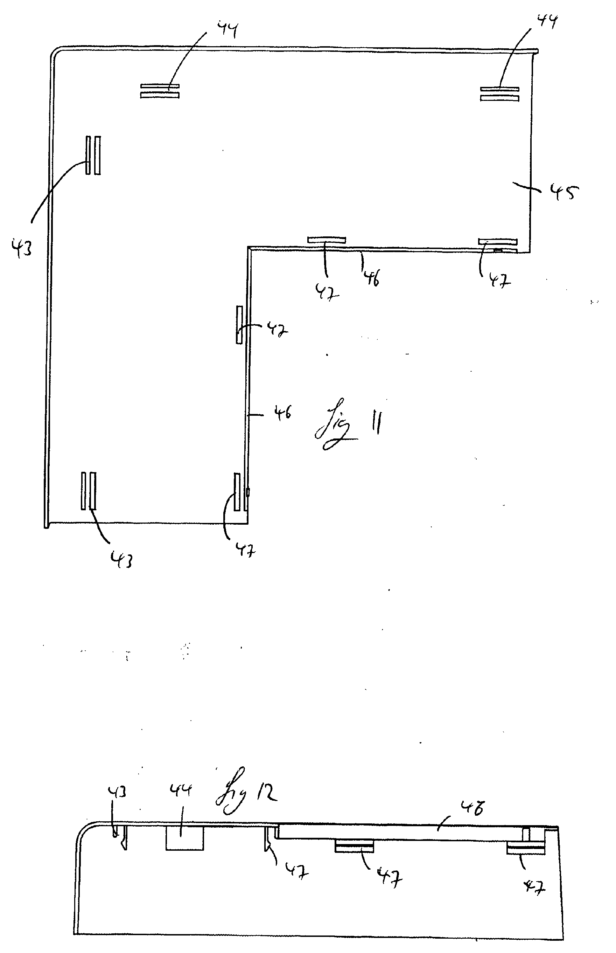

Figure 4 shows a corner structure according to the present invention. It comprises a corner as shown in figure 1. In the corner region, it is covered by a cover structure which comprises a first, internal angle cover part 20 and a second, external angle cover part 21.

The cover part 20 includes a cover surface 22 which extends up to the centre line (defined by the central dividing wall 4) of the first and second sections of service provision ducting. Similarly, the external angle cover part 21 comprises a cover surface 23 which extends up to the centre line. At the centre line, the internal and external angle cover parts 20 and 21 meet, forming a complete cover.

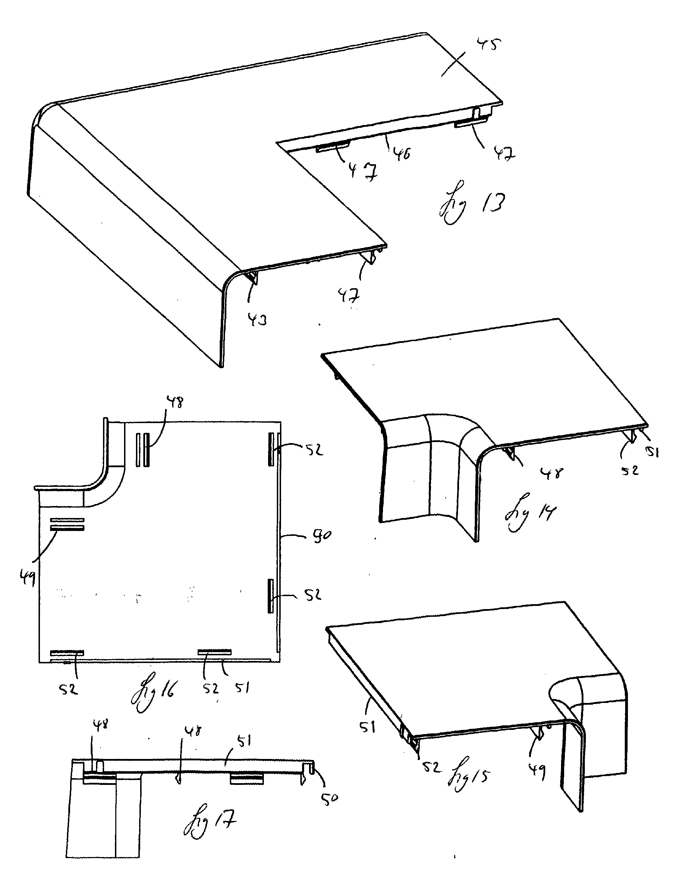

Figure 5 shows four internal angle cover parts 24, 25, 26 and 27, extending from the right angles C, D, E and F.

Each of the internal angle cover parts 24-27 is identical to the cover part 20 shown in figure 4. Each comprises a cover surface 28 which extends up to the centre line of the first section of service provision ducting 11 and up to the centre line 30, or the continuation thereof, of the second and third sections of service provision ducting 12 and 13.

The cover surfaces 28 of the internal angle cover parts meet along the centre lines 29 and 30 to form a complete, closed cover for the cross-over.

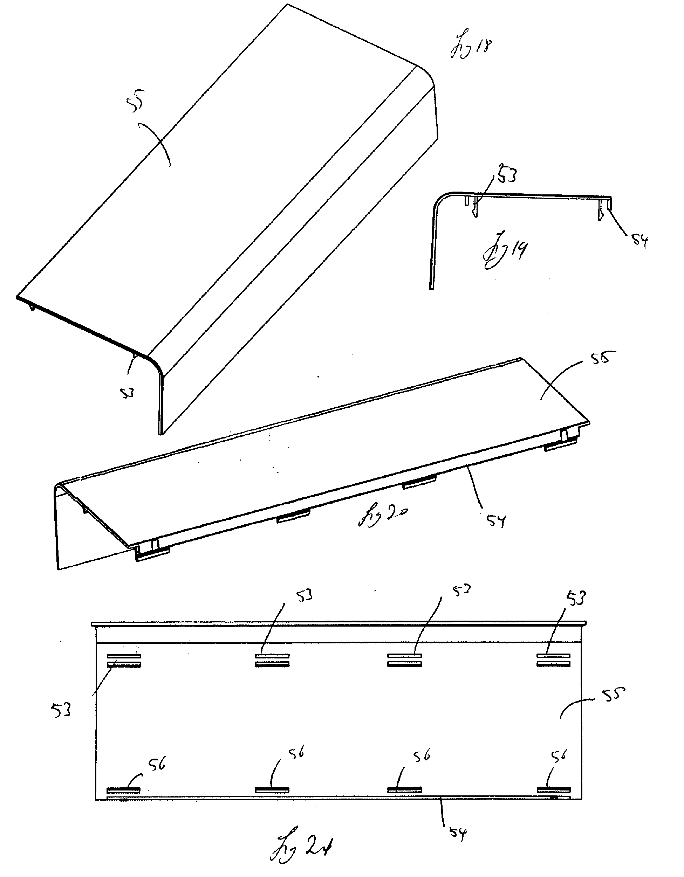

Figure 6 shows a T junction assembly according to the invention. It employs a flat T as shown in figure 2. A pair of internal angle cover parts 31 and 32 are provided extending from the right angles A and B. Each comprises a cover surface 35 which extends up to the centre line 33 of the first section 6 of service provision ducting and up to the centre line 34, or notional continuation thereof, of the second section of service provision ducting, 7.

On the opposite side to the right angles A and B, a straight wall cover part 36 is provided which extends up to the centre line 33 of the first section of service provision ducting. Along the centre lines 33 and 34, the cover parts meet, forming a closed cover.

The internal angle cover parts 35 are identical to the internal angle cover part 20 and the internal angle cover part 24-28 of figures 4 and 5.

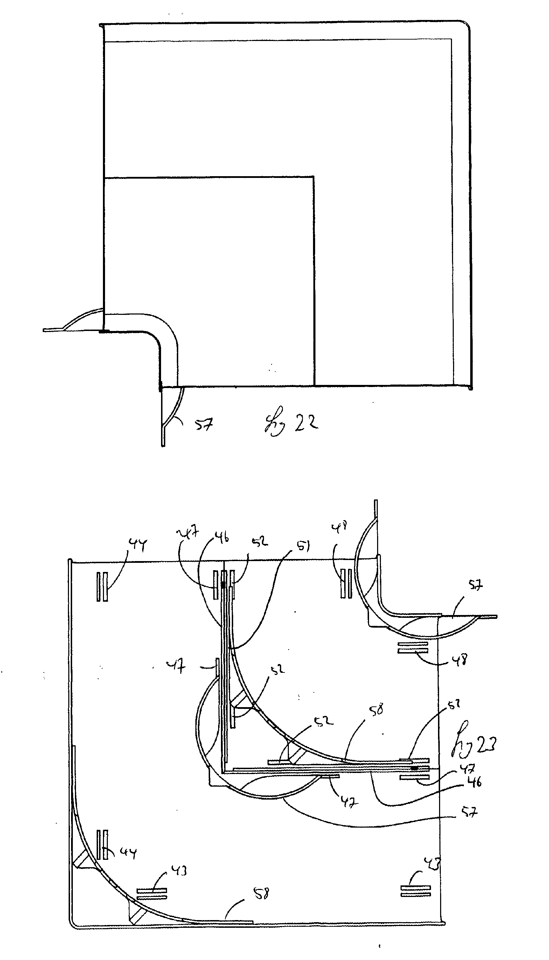

Figure 7 shows an isometric view of the flat corner shown in figure 1. It has already been described with reference to figure 1 above.

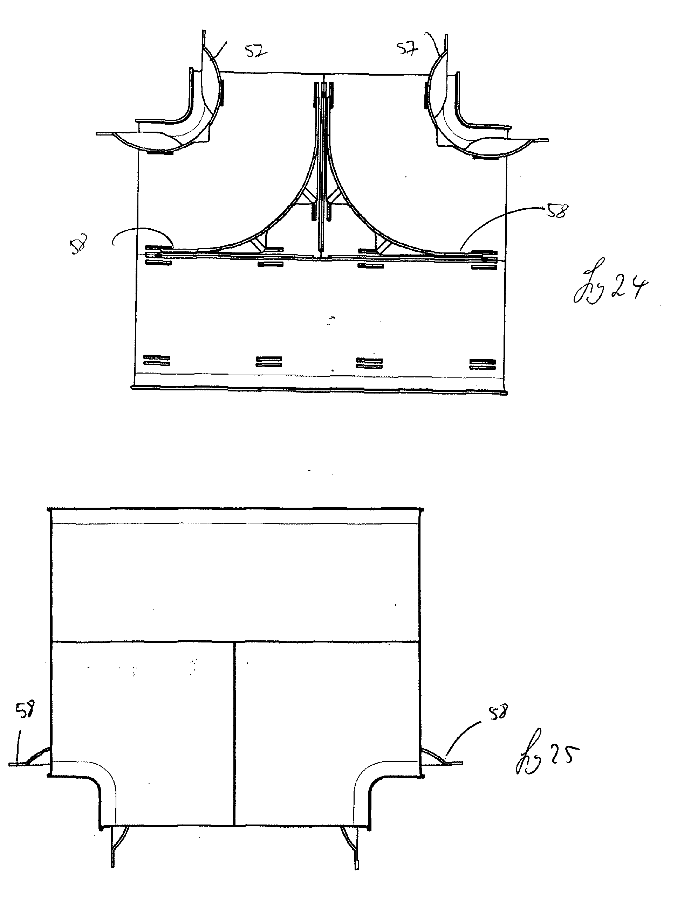

Figure 8 is a sketch isometric of view of the straight wall of cover part 36 of figure 6. It comprises a wall part 37 and a cover surface 38 which extends from the wall part 37.

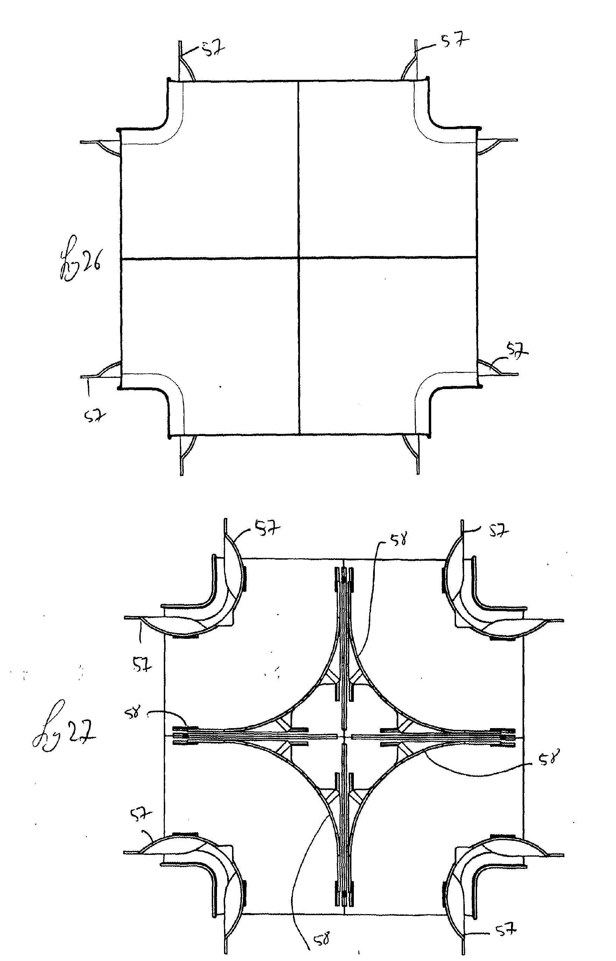

Figure 9 is a sketch isometric view of an internal angle cover part according to any of figures 4,5, and 6. It comprises a corner surface 39 and cover surface 40 extending from the corner surface 39.

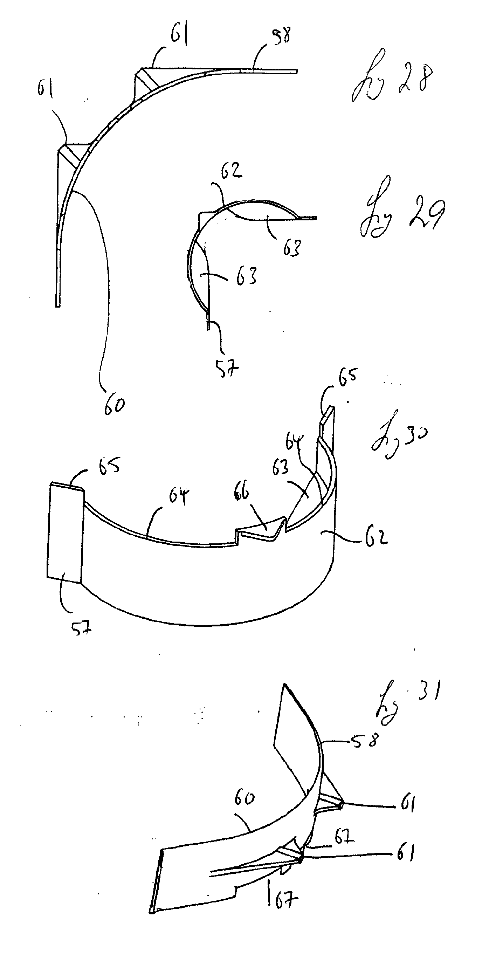

Figure 10 is a sketch isometric view of a external angle cover part as used in figure 4. It comprises a pair of external angle walls 41 which meet one another at a right angle and a cover surface 42 which extends from both external angle cover walls 41.

Figure 11-13 shows views of a second embodiment of external angle cover for use in the present invention. It is similar in design to figure 10. However, it includes a first set of clips 43 which are configured to engage with the top of the wall of service provision ducting for example as shown in figure 7. There is a second set of clips 44 for engaging the top of wall member of a second section of service provision ducting.
There is a cover surface 45 which corresponds to the cover surface 42 of figure 10. At its internal periphery, the cover surface 45 comprises a lip which extends along one edge and then along a second edge at right angles to the first edge. This lip is provided to rest against a corresponding lip of other cover parts so that a secure closure can be formed between the cover parts. A set of clips 47 are provided. These grip together with the lips 46, a flange of a central dividing wall of section service provision ducting which has a double flange at the top of its central dividing wall.

Figures 14-17 shows sketch isometric views of a second embodiment of internal angle cover part according to the invention. It is similar in design to figure 9, but includes the following additional features. A first clip 48 and a second clip 49 are provided for engaging the tops of wall members of sections of service provision ducting. A pair of lips 50, 51 are provided for engaging against the corresponding lip and of an adjacent cover part. Clips 52 are provided for engaging, together with the lips 50 and 51, a flange of a central dividing wall of service provision ducting which has a double flange at the top of the central dividing wall.

Figures 18-21 shows views of a second embodiment of straight wall cover part according to the present invention. It is similar in design to that shown in figure 8, but includes the following additional features.

A set of clips 53 are provided for engaging with the top of a wall member of a section of service provision ducting.

A lip 54 is provided extending down from the edge of a cover surface 55. The lip 54 is for abutting against a corresponding lip of another cover part. A set of clips 56 are provided for engaging, together with the lip 54, the top flange of a central dividing wall of a section of service provision ducting, which dividing wall has a double flange at its top.

Figure 22 is a sketch plan view showing how the internal angle cover part of figures 14-17 and the external angle cover part of figures 11-13 can be assembled together, with a corner piece 57 according to figure 29.

Figure 23 is a view from the underneath of figure 22. It can be seen that a further corner piece 57 according to figure 29 is included, the top of which abuts the lip 46 of the external angle cover part. Further, there is a corner piece 58 according to figure 28 which abuts the wall parts of the external angle cover part and a further corner piece 58 according to figure 28 which abuts the lip 51 of the internal angle cover part.

It should be noted that the internal angle cover part, the corner pieces 58, the corner pieces 57 and the external angle part are not connected together by any engaging means.
Figure 23 simply shows how they should be placed together. In use, clips, 44, 43, 47, 48, 52 engage with the tops of wall members of sections of service provision ducting (not shown) and the upper flanges of a central dividing wall of sections of service provision ducting which have a double flange at the top. The corner pieces rest in the sections of service provision ducting.

Figure 25 shows how a straight wall cover part according to figures 18-21 may be combined with two internal angle cover parts according to figures 11-13 to form a flat T, together with a pair of corner pieces 58 according to figure 29. Figure 24 shows the under side of the flat T of figure 25. It can be seen that there is an additional pair of corner pieces 58 according to figure 28. In a similar manner to figures 22 and 23, there is no mechanical connection between the part shown in figure 24. They are instead connected together by mutual engagement with sections of service provision ducting (not shown). Clips and lips of the internal angle cover parts and the straight wall cover part engage with the upper flanges of service provision ducting, in a similar manner to figures 22-23, and will not be described further below.

Figures 26 shows how four internal angle cover parts according to figures 11-13 can be combined to form a cross-over, together with four corner pieces 57 according to figure 29.

Figure 27 shows the under side of figure 26. It can be seen that there are additional four additional corner pieces 58 according to figure 28. In a similar manner to figure 22, 23, 24 and 25, there is no mechanical connection between the parts shown in figure 27. They are connected together due to their common engagement with service provision ducting (not shown) the internal angle cover parts engage with service provision ducting via the clips described in relation to figures 11-13 above and will not be described further.

Figure 28 is a plan view of a corner piece 58 for use with the present invention. It comprises a curved surface 60 of a radius of curvature which is not less than a predetermined value. This predetermined value will be fixed by the design of fibre optic cable to be used and normally falls in the range 25-75mm, typically around 50mm. The corner piece further comprises a pair of ribs 61 which extend from the rear face of the corner piece. Each ribs 61 has a straight edge. In use, the rib 61 allow the corner piece to be firmly placed against the wall members of sections of service provision ducting.

Figure 29 shows a corner piece 57 for use with the present invention. It comprises a curved surface 62 which extends through approximately 270°. The radius of curvature of the curved surface 62 is not less than a predetermined value. The predetermined value is fixed by type of fibre optic cable to be used and is normally in the range 25mm-75mm and typically around 50mm. A pair of ribs 63 project from a rear surface of the corner piece 57 for engagement against wall members of sections or service provision ducting, to hold the comer piece firmly in position.

Figure 30 is a sketch isometric view of the corner piece 57 of Figure 29. It is viewed from below. The curved surface 62 and a rib 63 can be seen. It can be seen that the lower edge of the curved surface 62 is notched at 64. This is to allow the corner piece to be fitted into the bottom of service provision ducting which comprises engagement members extending from the floor member. The corner piece 57 is then held in position resting only on the ends 65 and a specially provided foot 66.

Figure 31 is a sketch isometric view of the corner piece of Figure 28. The curved surface 60 and ribs 61 can be seen. Figure 31 is a view from above. A pair of notches 67 can be seen. These are provided to extend over longitudinally extending engagement members which project from the floor member of the trunking.

The present invention has been described above by way of example only and modifications can be made within the invention. The invention also extends to any individual features described or implicit herein or any modifications or any combination or generalisation of any such features.

## Claims

1. A corner or junction assembly comprising at least two sections of service provision ducting meeting at an angle, each section comprising a longitudinally extending floor member and at least one longitudinally extending wall member projecting from the floor member, the floor members of the sections of service provision ducting being substantially coplanar, and adjacent sections of service provision ducting defining between them an angle, a cover part being providing extending from each angle up to, but no further than, the centre line of the respective sections of service provision ducting.

2. A method of assembling a corner or junction assembly for service provision ducting, comprising placing at least two sections of service provision ducting at an angle to one another, each section comprising a longitudinally extending floor member and at least one longitudinally extending wall member projecting from the floor member, the floor members of the sections of service provision ducting being substantially coplanar and adjacent sections of service provision ducting defining between an angle, the method further including the step of inserting a cover part which extends from each angle up to but no further than the centre line of the respective sections of service provision ducting.

3. A corner or junction assembly according to Claim1, being a flat T, flat bend or flat crossover.

4. A corner or junction assembly according to Claim 1 or 3, wherein the sections of service provision ducting meet substantially at a right angle.

5. A corner or junction assembly according to Claim 1, 3 or 4, comprising at least internal angle cover part, comprising a corner surface and a cover surface extending from the corner surface.

6. A corner or junction assembly according to any of Claims 1, 3, 4 or 5, a corner piece being provided extending between two sections of service provision ducting, the corner piece comprising a surface having a first end lying on the wall member of the first section of service provision ducting and a second end lying on a wall member of the second section of service provision ducting, and a curved section of radius not less than a value in the range 25-75mm joining the first and second ends of the corner piece.

7. A component for a corner or junction assembly as defined in any of claims 1, 3, 4, 5 or 6, the component comprising a corner surface and a cover surface extending from the corner surface, whereby in use, the corner surface is located in the angle between two adjacent sections of service provision ducting and the cover section extends from the angle up to but no further than the centre line of the respective sections of service provision ducting.

8. A kit of parts for forming a corner or junction assembly according to any of claims 1,3 4,5 or 6, comprising at least four internal angle cover parts, at least one external angle cover part and at least one straight wall cover part, whereby selected ones of the cover parts may be assembled selectively to form a flat bend, flat T or flat crossover.
